# EUROPEAN PATENT SPECIFICATION

(11) **EP 1 591 664 B1**
(45) Date of publication and mention of the grant of the patent: **24.08.2016**
(21) Application number: 05009094.3
(22) Date of filing: 26.04.2005
(51) Int. Cl.: F04D 29/08, F04D 29/42

(54) **Sealing mechanism for water pump**
Wasserpumpendichtung
Système d'étanchéité pour pompe à eau

(30) Priority: 27.04.2004 JP 2004131195
(43) Date of publication of application: 02.11.2005
(73) Proprietor: AISIN SEIKI KABUSHIKI KAISHA, Kariya-shi, Aichi-ken 448-8650 (JP)
(72) Inventor: Ozawa, Yasuo, c/o Aisin Seiki Kabushiki Kaisha, Kariya-shi Aichi-ken, 448-8650 (JP); Kimura, Ichiro, c/o Aisin Seiki Kabushiki Kaisha, Kariya-shi Aichi-ken, 448-8650 (JP); Hashiguchi, Itsuro, Aisin Seiki Kabushiki Kaisha, Kariya-shi Aichi-ken, 448-8650 (JP); Koga, Hiroyoshi, c/o Aisin Seiki Kabushiki Kaisha, Kariya-shi Aichi-ken, 448-8650 (JP)
(74) Representative: Kramer Barske Schmidtchen Patentanwälte PartG mbB

(56) References cited:
- EP-A- 1 191 262
- JP-A- 2003 314 491
- US-A- 3 251 309

## Description

### BACKGROUND OF THE INVENTION

### 1. Field of the Invention

This invention relates to a sealing mechanism for a water pump.

### 2. Description of the Related Art

A typical water pump is disclosed in, for example, pages 3 and 4 and Fig. 1 of Japanese Unexamined Patent Application Publication No. 2003-314491. In this water pump, a front portion of a pump body 12 is provided with a cylindrical supporting section 12b having a small diameter. The cylindrical supporting section 12b rotatably supports a pulley 20 via a bearing unit 14. The pulley 20 is provided with a shaft 25 which extends towards the rear side of the water pump through a center hole 26 provided in the cylindrical supporting section 12b, such that a rear end portion of the shaft 25 is integrally combined with an impeller 30. The water pump also includes a block 90 whose front portion is provided with an attachment surface. The attachment surface is depressed and thus provided with an opening functioning as a vortex chamber 95. Furthermore, the attachment surface of the block 90 is also provided with an annular groove that surrounds the opening defined by the vortex chamber 95. An annular sealing member 80 is embedded in the annular groove. The pump body 12 is fixed to the attachment surface of the block 90 in a manner such that the impeller 30 is housed in the vortex chamber 95 and that the annular sealing member 80 is disposed between the pump body 12 and the block 90. Moreover, a mechanical sealing member 50 intervenes an inner surface of the pump body 12 facing the vortex chamber 95 and an outer periphery surface of the rear end portion of the shaft 25.

Conventionally, an annular sealing member is provided with a protruding segment which protrudes from an outer periphery thereof such that the protruding segment extends outward from the outer periphery of a pump body. The protruding segment is used for determining whether the annular sealing member is properly installed after a water pump is fabricated by securely attaching the pump body to an attachment surface of a block. Specifically, the protruding segment is embedded in a branching groove segment which branches out from an annular groove provided in the attachment surface of the block.

Furthermore, since the block is a die-cast product formed by, for example, aluminum die-casting, a gas-leakage test is performed in order to inspect for casting faults, such as a cavity, in an internal water duct and the annular groove into which the annular sealing member is to be embedded. In order to perform such a test, a leakage-test sealing-member is embedded in the annular groove during the fabrication process such that the leakage-test sealing member is in contact with the bottom surface of the annular groove. While the opening of the attachment surface of the block defined by a vortex chamber is sealed, gas pressure is applied to the internal space of the block. In order to perform such a test on a large number of blocks, each leakage-test sealing member is made narrower in width than the annular groove so that the sealing member can be easily detached. However, the narrow leakage-test sealing member is problematic in that its life span is extremely short. Moreover, since the leakage-test sealing member is to be embedded in the annular groove, the block must be positioned accurately with respect to the sealing member. Furthermore, the branching groove segment for holding the protruding segment used for determining the proper installation of the annular sealing member divides the attachment surface at an outer periphery side of the annular groove. For this reason, the opening of the attachment surface defined by the vortex chamber cannot be sealed since the sealing member cannot be made in contact with the attachment surface at the outer periphery side of the annular groove. If the sealing member is made in contact with the attachment surface at an inner side of the annular groove to seal the opening of the attachment surface defined by the vortex chamber, the annular groove cannot be inspected for casting faults.

### SUMMARY OF THE INVENTION

Accordingly, it is an object of the present invention to provide a sealing mechanism for a water pump that allows for an easy inspection for faults that may be present in internal spaces of a block, such as an annular groove having a branching groove segment for holding a protruding segment of an annular sealing member used for determining a proper installation of the annular sealing member, and a vortex chamber surrounded by the annular groove.

According to an aspect of the present invention, a sealing mechanism for a water pump is provided in which the water pump includes a pump body; an impeller rotated by driving means; and a block which forms a vortex chamber together with the pump body, the vortex chamber housing the impeller, wherein the pump body and the block respectively have attachment surfaces that surround an opening defined by the vortex chamber, wherein a first one of the attachment surfaces is provided with an annular groove, and wherein the pump body and the block are combined with each other via the respective attachment surfaces in a manner such that an annular sealing member is embedded in the annular groove and disposed between the pump body and the block. The sealing mechanism includes the annular sealing member including a protruding segment protruding from a periphery of the annular sealing member such that the protruding segment extends outward from an outer periphery of a second one of the attachment surfaces when the block and the pump body are combined via the respective attachment surfaces with the sealing member embedded in the annular groove; and the annular groove including a branching groove segment which branches out from the annular groove and is provided in the first one of the attachment surfaces such that the protruding segment is embedded in the branching groove segment when the block and the pump body are combined via the respective attachment surfaces with the sealing member embedded in the annular groove.

The first one of the attachment surfaces has a single plane and extends continuously around the annular groove and the branching groove segment in a surrounding manner.

In the sealing mechanism for the water pump, the driving means may be a pulley rotatably supported by a cylindrical supporting section via a shaft bearing unit, the cylindrical supporting section being provided in a portion of the pump body, the portion being proximate one side of the water pump. Moreover, the pulley may include a shaft extending towards the other side of the water pump through a center hole provided in the cylindrical supporting section such that an end portion of the shaft is integrally combined with the impeller, the end portion being proximate the other side of the water pump. Furthermore, the first one of the attachment surfaces may be provided in the block and the second one of the attachment surfaces may be provided in the pump body.

As mentioned above, according to the present invention, the pump body and the block respectively have attachment surfaces that surround an opening defined by the vortex chamber, and the first one of the attachment surfaces is provided with the annular groove. Moreover, the annular sealing member embedded in the annular groove is provided and has the protruding segment protruding from the periphery of the annular sealing member such that the protruding segment extends outward from the outer periphery of the second one of the attachment surfaces. Furthermore, the annular groove includes the branching groove segment which branches out from the annular groove and is provided in the first one of the attachment surfaces such that the protruding segment is embedded in the branching groove segment. Consequently, after the water pump is fabricated by combining the pump body and the block via the respective attachment surfaces, the protruding segment may be visually checked to determine whether the annular sealing member is properly installed. Furthermore, since the first attachment surface has a single plane and extends continuously around the annular groove and the branching groove segment in a surrounding manner, a gas-leakage test can be performed by applying gas pressure to the internal space of the block in a state where a leakage-test sealing member is in contact with the first attachment surface at the outer periphery side of the annular groove and the branching groove segment such that the internal space surrounded by the first attachment surface is sealed. Accordingly, an inspection process for faults in the annular groove and the internal space can be readily performed while achieving a simple and low-cost structure. Furthermore, since the leakage-test sealing member is not to be embedded in the annular groove, the leakage-test sealing member may have a large width. This achieves a longer life span of the leakage-test sealing member. Moreover, the block may be positioned roughly with respect to the leakage-test sealing member.

In addition, since the protruding segment protruding from the periphery of the annular sealing member may extend outward from the outer periphery of the pump body, and the branching groove segment branching out from the annular groove and holding the protruding segment may be provided in the attachment surface of the block, the protruding segment may be visually checked to determine whether the annular sealing member is properly installed after the water pump is fabricated by combining the pump body and the block via the respective attachment surfaces. Furthermore, since the attachment surface has a single plane and extends continuously around the annular groove and the branching groove segment in a surrounding manner, a gas-leakage test can be performed by applying gas pressure to the internal space of the block in a state where a leakage-test sealing member is in contact with the attachment surface at the outer periphery side of the annular groove and the branching groove segment such that the opening in the attachment surface defined by the vortex chamber is sealed. Accordingly, an inspection process for faults in the annular groove and the internal space can be readily performed while achieving a simple and low-cost structure. Furthermore, since the leakage-test sealing member is not to be embedded in the annular groove, the leakage-test sealing member may have a large width. This achieves a longer life span of the leakage-test sealing member. Moreover, the block may be positioned roughly with respect to the leakage-test sealing member.

### BRIEF DESCRIPTION OF THE DRAWINGS

The foregoing and additional features and characteristics of the present invention will become more apparent from the following detailed description considered with reference to the accompanying drawings, wherein:
Fig. 1 is a cross-sectional view of a first type of water pump provided with a sealing mechanism according to an embodiment of the present invention;
Fig. 2 mainly illustrates a section of an attachment surface of a block;
Fig. 3 mainly illustrates an annular sealing member;
Fig. 4 is a cross-sectional view of a second type of water pump provided with the sealing mechanism according to the present invention;
Fig. 5 is a cross-sectional view of a third type of water pump provided with the sealing mechanism according to the present invention; and
Fig. 6 is a cross-sectional view of a fourth type of water pump provided with the sealing mechanism according to the present invention.

### DETAILED DESCRIPTION OF THE INVENTION

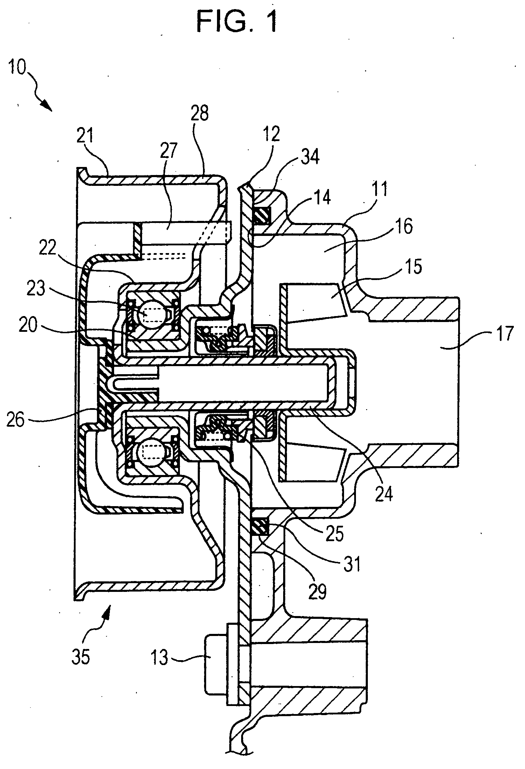

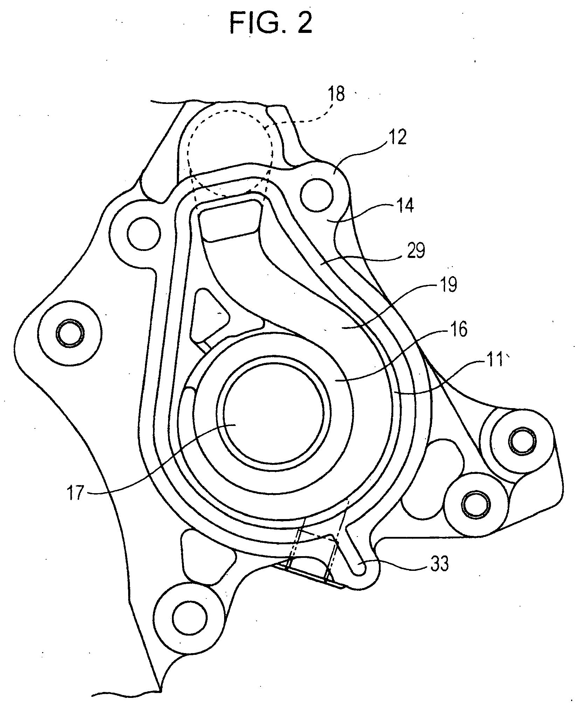

A first type of water pump 10 provided with a sealing mechanism according to an embodiment of the present invention will now be described with reference to the drawings. In the description below, the terms "front" and "rear" respectively refer to the left and right sides of a water pump in cross section shown in each of Figs. 1, 4, 5, and 6. Referring to Figs. 1 and 2, the water pump 10 includes a block 11 which is a part of a chain case fixed to a front face of a cylinder block of an engine. A front portion of the block 11 has an attachment surface 14 to which a pump body 12 is fixed with a bolt 13. The attachment surface 14 is depressed and thus provided with an opening functioning as a vortex chamber 16 that houses an impeller 15. The impeller 15 rotates and creates a centrifugal force that allows coolant water in the vortex chamber 16 to flow outward and to be pressurized. The coolant water thus travels through a water duct 19 disposed around the periphery of the vortex chamber 16 in the block 11 so as to be discharged outward from a discharge hole 18. Moreover, a rear portion of the block 11 is provided with a suction hole 17 which communicates with the vortex chamber 16. The discharging of coolant water causes a reduction of pressure in the vortex chamber 16, whereby new coolant water is sucked in through the suction hole 17.

A front portion of the pump body 12 is provided with a cylindrical supporting section 20 which rotatably supports a pulley 21 via a shaft bearing unit 23. The shaft bearing unit 23 is disposed between an outer periphery surface of the cylindrical supporting section 20 and an inner surface of a cylindrical boss 22 of the pulley 21. The pulley 21 is provided with a shaft 24 which extends through a center hole of the cylindrical supporting section 20 towards the vortex chamber 16 in the block 11 such that a rear end portion of the shaft 24 is engaged with the impeller 15.

The water pump 10 further includes a mechanical sealing member 25. The mechanical sealing member 25 includes a stationary unit and a rotatable unit which perform a sliding operation in order to prevent the coolant water from flowing forward from the vortex chamber 16. Specifically, the stationary unit is fitted to a large-diameter recess provided on the rear side of the cylindrical supporting section 20 of the pump body 12, and the rotatable unit is fitted around the outer periphery of the rear end portion of the shaft 24 of the pulley 21.

Furthermore, the water pump 10 further includes a cylindrical cover 26 provided with a base surface. The cylindrical cover 26 is fixed to the pulley 21 such that the base surface of the cylindrical cover 26 covers the front side of the cylindrical boss 22 of the pulley 21. A section in the outer periphery of the cylindrical cover 26 is provided with a fixing segment 27 which axially extends towards the rear side of the water pump 10. A rear end portion of the fixing segment 27 is provided with a claw which is engaged with a hole provided in a wall portion of the pulley 21, whereby the cylindrical cover 26 is fixed to the pulley 21. Specifically, the wall portion extends between the cylindrical boss 22 and a belt hanging portion 28 defining the outer periphery surface of the pulley 21. The center of the cylindrical cover 26 is provided with a central shaft extending towards the rear side of the water pump 10 and having a slit extending in the axis direction of the central shaft. The central shaft is resiliently fitted in a shaft hole provided in the shaft 24 of the pulley 21 so as to block the shaft hole.

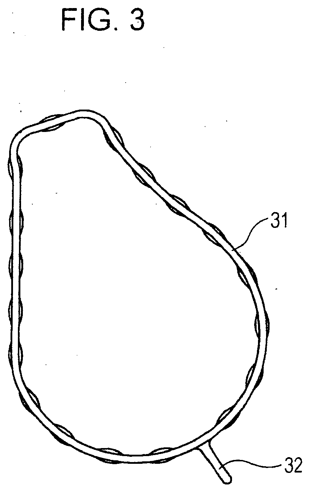

The attachment surface 14 of the block 11 is provided with an annular groove 29 which surrounds the opening in the attachment surface 14 defined by the vortex chamber 16 and the water duct 19. The pump body 12 is fixed to the attachment surface 14 via the bolt 13 in a manner such that the impeller 15 is housed in the vortex chamber 16 and that an annular sealing member 31 (see Fig. 3) embedded in the annular groove 29 is disposed between an attachment surface 34 of the pump body 12 and the attachment surface 14 of the block 11. The annular sealing member 31 has a protruding segment 32 protruding from the periphery thereof, such that the protruding segment 32 extends outward from the outer periphery of the pump body 12 or the attachment surface 34. The attachment surface 14 is provided with a branching groove segment 33 that branches out from the annular groove 29 such that the protruding segment 32 is embedded in the branching groove segment 33. The attachment surface 14 has a single plane and extends continuously around the annular groove 29 and the branching groove segment 33 in a surrounding manner. Consequently, the opposite sides of the entire annular sealing member 31 are respectively pressed by the bottom surface of the annular groove 29 and the attachment surface 34 of the pump body 12. Thus, the vortex chamber 16 and the water duct 19 surrounded by the annular groove 29 and defining the opening in the attachment surface 14 are sealed from the outside. Furthermore, by visually checking that the protruding segment 32 properly extends outward from the outer periphery of the pump body 12 or the attachment surface 34, it can be confirmed that the annular sealing member 31 is properly installed.

In order to inspect for faults in the block 11, such as a cavity, during a manufacturing process, a leakage-test sealing-member may be pressure-bonded to the attachment surface 14 extending continuously around the annular groove 29 and the branching groove segment 33. In this case, while the internal spaces of the block 11, such as the annular groove 29, the vortex chamber 16, and the water duct 19, are sealed, gas pressure is applied to the internal spaces so that the annular groove 29 and the internal spaces in the block 11 can be inspected for faults.

When the pulley 21 is rotated by a belt hung between a pulley engaged with an end of a crankshaft of the engine and the belt hanging portion 28 of the pulley 21, the impeller 15 engaged with the shaft 24 of the pulley 21 is accordingly rotated. Specifically, the pulley engaged with the end of the crankshaft of the engine, the pulley 21, and the belt hung between the two pulleys, for example, define driving means 35 for rotating the impeller 15.

A pumping action generated in response to the rotation of the impeller 15 allows the coolant water in the vortex chamber 16 to flow outward and be pressurized due to a centrifugal force. The coolant water thus travels through the water duct 19 so as to be discharged outward from the discharge hole 18. The discharging of the coolant water causes a reduction of pressure in the vortex chamber 16, whereby new coolant water is sucked in through the suction hole 17.

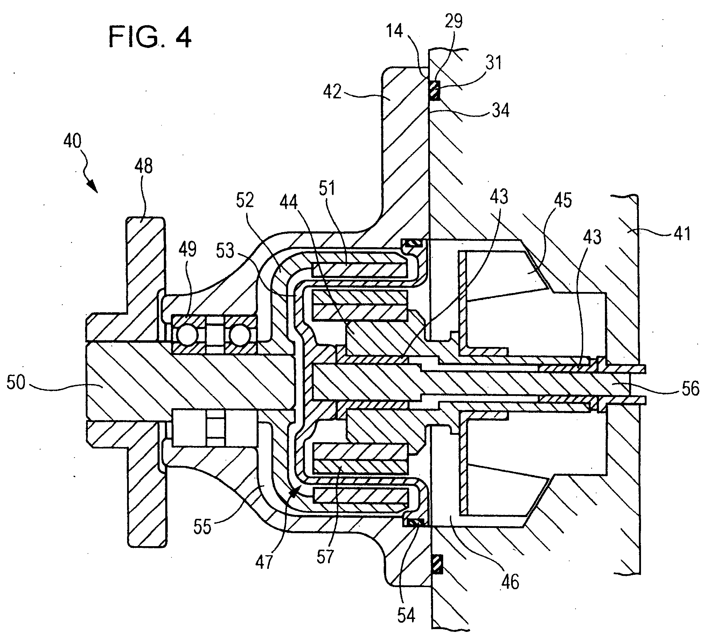

Water pumps of second to fourth types each provided with the sealing mechanism according to the present invention will now be described with reference to Figs. 4 to 6, respectively. The sealing mechanism is the same as that provided in the first type of water pump 10, and therefore, the corresponding components are given the same reference numerals, and detailed description of such components will be omitted below to prevent redundancy.

Fig. 4 illustrates a second type of water pump 40 which is a magnetically-driven pump. The water pump 40 includes a block 41 which is a front end portion of a cylinder block of an engine. A front portion of the block 41 has an attachment surface 14 to which a pump body 42 is fixed with a bolt. The attachment surface 14 is depressed and is thus provided with an opening functioning as a vortex chamber 46 that houses an impeller 45. The attachment surface 14 is provided with an annular groove 29 which surrounds the opening in the attachment surface 14 defined by the vortex chamber 46. An annular sealing member 31 is embedded in the annular groove 29 and is disposed between the attachment surface 14 of the block 41 and an attachment surface 34 of the pump body 42.

The water pump 40 further includes driving means 47 for rotating the impeller 45. The driving means 47 includes a pulley sheet 48 integrally connected with a pulley to which a torque from the engine is transmitted, and a driving shaft 50 rotatably supported by the pump body 42 via a bearing unit 49. The pulley sheet 48 and the driving shaft 50 are combined with each other. A driving magnet unit 52 has a magnet 51 fixed thereto and is attached to the driving shaft 50. A wall portion 53 is disposed within an inner surface of the pump body 42. An outer periphery of the wall portion 53 is provided with a sealing member 54 which separates the vortex chamber 46 from a space 55 formed inside the pump body 42. A supporting shaft 56 is secured to the block 41 and the wall portion 53, and rotatably supports a shaft unit 44 via a submerged bearing unit 43 at a side of the wall portion 53 proximate the vortex chamber 46. Specifically, the shaft unit 44 is engaged with the impeller 45, and is provided with an induction coil 57 at a position facing the magnet 51.

Accordingly, when the engine rotates the pulley sheet 48 via the pulley, the magnet 51 is correspondingly rotated, whereby an induction current is generated in the induction coil 57. A magnetic force generated in response to this current and the magnetic force of the magnet 51 allow the torque of the pulley to be transmitted to the impeller 45. Consequently, the impeller 45 is rotated, and a pumping action generated in response to this rotation allows coolant water to be sucked into the vortex chamber 46 through a suction hole and then be discharged outward from a discharge hole.

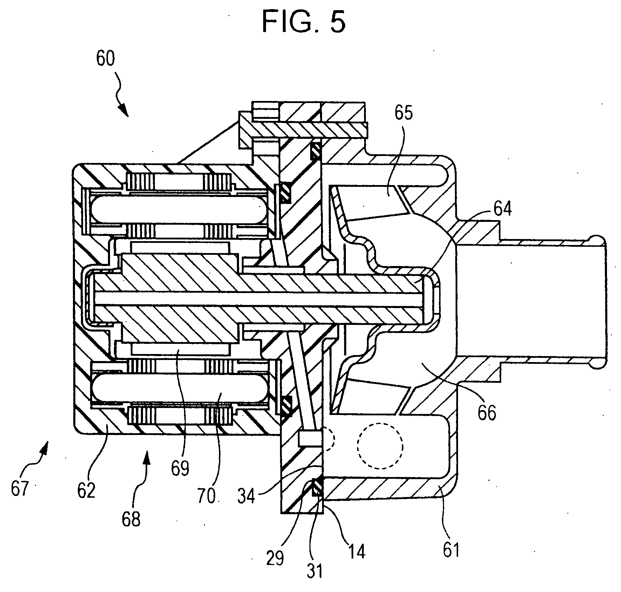

Fig. 5 illustrates a third type of water pump 60 which is an electric-motor-driven pump. The water pump 60 includes a pump body 62 and a block 61 which are combined with each other via respective attachment surfaces 14 and 34. In the block 61, the attachment surface 34 is depressed and thus provided with an opening functioning as a vortex chamber 66 that houses an impeller 65. On the other hand, the attachment surface 14 of the pump body 62 is provided with an annular groove 29 which surrounds the opening in the attachment surface 34 defined by the vortex chamber 66. The block 61 is securely combined with the pump body 62 in a manner such that an annular sealing member 31 embedded in the annular groove 29 is disposed between the block 61 and the pump body 62. The annular sealing member 31 has a protruding segment 32 protruding from the periphery thereof, such that the protruding segment 32 extends outward from the outer periphery of the block 61. The attachment surface 14 of the pump body 62 is provided with a branching groove segment 33 that branches out from the annular groove 29 such that the protruding segment 32 is embedded in the branching groove segment 33. The attachment surface 14 has a single plane and extends continuously around the annular groove 29 and the branching groove segment 33 in a surrounding manner.

An electric motor 68 defining driving means 67 for rotating the impeller 65 includes a magnet 69 fixed to a shaft 64, and an electric-wire coil 70 wound around the magnet 69. In the water pump 60, the electric motor 68 rotates the impeller 65 engaged with the shaft 64 inside the vortex chamber 66 formed by the pump body 62 and the block 61.

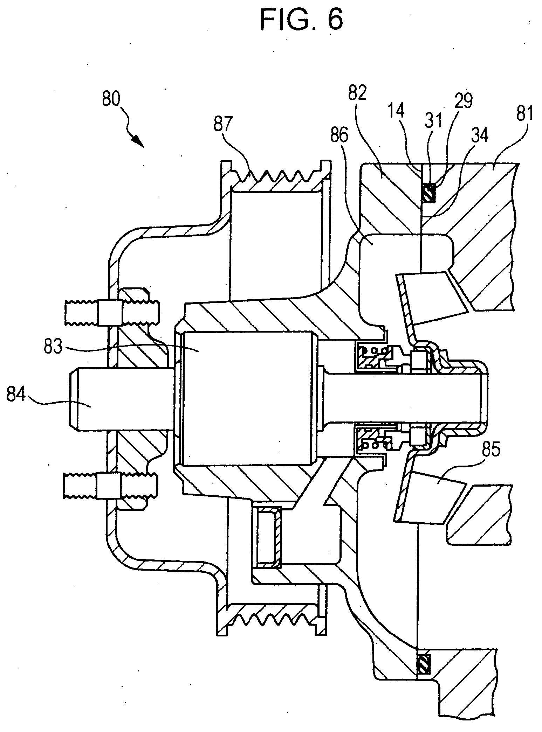

Fig. 6 illustrates a fourth type of water pump 80, which is similar to the first type in that the water pump 80 is driven with a pulley. The water pump 80 includes a block 81 which is a front end portion of a cylinder block of an engine. An attachment surface 14 of the block 81 is fixed to an attachment surface 34 of a pump body 82 formed by aluminum casting via a bolt. The attachment surface 34 of the pump body 82 and the attachment surface 14 of the block 81 are respectively provided with depressions which together define a vortex chamber 86. The attachment surface 14 of the block 81 is provided with an annular groove 29 which surrounds an opening defined by the vortex chamber 86. The pump body 82 is securely combined with the block 81 in a manner such that an annular sealing member 31 embedded in the annular groove 29 is disposed between the pump body 82 and the block 81. A cylindrical section of the pump body 82 rotatably supports a shaft 84 via a bearing unit 83. The shaft 84 is engaged with a pulley 87. A rear end portion of the shaft unit 84 is engaged with an impeller 85 inside the vortex chamber 86, such that the impeller 85 can be rotated by the pulley 87.

## Claims

1. A sealing mechanism for a water pump (10) comprising:
a pump body (12);
an impeller (15) rotated by driving means (35); and
a block (11) which forms a vortex chamber (16) together with the pump body (12), the vortex chamber (16) housing the impeller (15), the sealing mechanism comprising an annular sealing member and respective attachment surfaces (14, 34) of the pump body (12) and the block (11) that surround an opening defined by the vortex chamber (16), wherein a first one of the attachment surfaces (14) is provided with an annular groove (29), and wherein the pump body (12) and the block (11) are combined with each other via the respective attachment surfaces in a such manner that the annular sealing member (31) is embedded in the annular groove (29) and disposed between the pump body (12) and the block (11),
wherein the sealing mechanism further comprises :
the annular sealing member (31) including a protruding segment (32) protruding from a periphery of the annular sealing member (31) such that the protruding segment (32) extends outward from an outer periphery of a second one of the attachment surfaces (34) when the block (11) and
the pump body (12) are combined via the respective attachment surfaces (14,34) with the sealing member (31) embedded in the annular groove (29);
**characterised in that** the annular groove (29) includes a branching groove segment (33) which branches out from the annular groove (29) and is provided in said first one of the attachment surfaces (14) such that the protruding segment (32) is embedded in the branching groove segment (33) when the block (11) and the pump body (12) are combined via the respective attachment surfaces (14,34) with the sealing member (31) embedded in the annular groove (29),
wherein said first one of the attachment surfaces(14) has a single plane that extends continuously around the annular groove (29) and the branching groove segment(33) in a surrounding manner.

2. The sealing mechanism for the water pump (10) according to Claim 1, wherein the driving means (35) comprises a pulley (21) rotatably supported by a cylindrical supporting section (20) via a shaft bearing unit (23), the cylindrical supporting section (20) being provided in a portion of the pump body (12), the portion being proximate one side of the water pump (10), and
wherein the pulley (21) includes a shaft (24) which extends towards the other side of the water pump (10) through a center hole provided in the cylindrical supporting section (20) such that an end portion of the shaft (24) is integrally combined with the impeller (15), the end portion being proximate the other side of the water pump (10).

3. The sealing mechanism for the water pump (10) according to Claim 1 or 2, wherein said first one of the attachment surfaces (14) is provided in the block (11) and said second one of the attachment surfaces (34) is provided in the pump body (12).

## Patentansprüche

1. Dichtmechanismus für eine Wasserpumpe (10), enthaltend:
einen Pumpenkörper (12);
ein Flügelrad (15), das durch ein Antriebsmittel (35) gedreht wird; und
einen Block (11), der eine Wirbelkammer (16) zusammen mit dem Pumpenkörper (12) ausbildet, wobei die Wirbelkammer (16) das Flügelrad (15) aufnimmt, der Dichtmechanismus ein ringförmiges Dichtelement und jeweilige Befestigungsoberflächen (14, 34) des Pumpenkörpers (12) und den Block (11) enthält, die eine Öffnung umgeben, die durch die Wirbelkammer (16) definiert ist,
wobei eine erste der Befestigungsoberflächen (14) mit einer ringförmigen Nut (29) versehen ist, und wobei der Pumpenkörper (12) und der Block (11) miteinander über die jeweiligen Befestigungsoberflächen so zusammengefügt sind, dass das ringförmige Dichtelement (31) in die ringförmige Nut (29) eingebettet ist und zwischen dem Pumpenkörper (12) und dem Block (11) angeordnet ist,
wobei der Dichtmechanismus weiter enthält:
das ringförmige Dichtelement (31), das ein vorspringendes Segment (32) enthält, das von einem Umfang des ringförmigen Dichtelements (31) so vorsteht, dass das vorstehende Segment (32) sich nach außen von einem Außenumfang einer zweiten der Befestigungsoberflächen (34) erstreckt, wenn der Block (11) und der Pumpenkörper (12) über die jeweiligen Befestigungsoberflächen (14, 34) zusammengefügt sind, wobei das Dichtelement (31) in der ringförmigen Nut (29) eingebettet ist;
**dadurch gekennzeichnet, dass** die ringförmige Nut (29) ein Verzweigungsnutsegment (33) enthält, das von der ringförmigen Nut (29) verzweigt und in der ersten der Befestigungsoberflächen (14) so vorgesehen ist, dass das vorstehende Segment (32) in dem Verzweigungsnutsegment (33) eingebettet ist, wenn der Block (11) und der Pumpenkörper (12) über die jeweiligen Befestigungsoberflächen (14, 34) zusammengefügt sind, wobei das Dichtelement (31) in der ringförmigen Nut (29) eingebettet ist,
wobei die erste der Befestigungsoberflächen (14) eine einzige Ebene hat, die sich kontinuierlich um die ringförmige Nut (29) und das Verzweigungsnutsegment (33) in einer diese umgebenden Weise erstreckt.

2. Dichtmechanismus für eine Wasserpumpe (10) nach Anspruch 1, wobei das Antriebsmittel (35) eine Riemenscheibe (21) enthält, die durch einen zylindrischen Stützabschnitt (20) über eine Schaftlagereinheit (23) zur Drehung gestützt ist, wobei der zylindrische Stützabschnitt (20) in einem Bereich des Pumpenkörpers (12) vorgesehen ist, wobei der Bereich proximal zu einer Seite der Wasserpumpe (10) ist, und
wobei die Riemenscheibe (21) einen Schaft (24) enthält, der sich in Richtung der anderen Seite der Wasserpumpe (10) durch ein zentrales Loch erstreckt, das in dem zylindrischen Stützabschnitt (20) so vorgesehen ist, dass ein Endbereich des Schafts (24) integral mit dem Flügelrad (15) kombiniert ist, wobei der Endbereich proximal zu der anderen Seite der Wasserpumpe (10) ist.

3. Dichtmechanismus für die Wasserpumpe (10) nach Anspruch 1 oder 2, wobei die erste der Befestigungsoberflächen (14) in dem Block (11) vorgesehen ist und die zweite der Befestigungsoberflächen (34) in dem Pumpenkörper (12) vorgesehen ist.

## Revendications

1. Mécanisme d'étanchéité destiné à une pompe à eau (10) comprenant :
un corps (12) de pompe ;
une roue (15) tournant sous l'action d'un moyen d'entraînement (35) ; et
un bloc (11) qui forme une chambre de vortex (16) avec le corps (12) de pompe, la chambre de vortex (16) logeant la roue (15), le mécanisme d'étanchéité comprenant un élément d'étanchéité annulaire et des surfaces de fixation respectives (14, 34) du corps (12) de pompe et du bloc (11) qui entourent une ouverture définie par la chambre de vortex (16),
dans lequel une première des surfaces de fixation (14) est pourvue d'une rainure annulaire (29), et dans lequel le corps (12) de pompe et le bloc (11) sont combinés l'un avec l'autre par le biais des surfaces de fixation respectives d'une manière telle que l'élément d'étanchéité annulaire (31) est incorporé dans la rainure annulaire (29) et disposé entre le corps (12) de pompe et le bloc (11),
dans lequel le mécanisme d'étanchéité comprend en outre :
l'élément d'étanchéité annulaire (31) incluant un segment saillant (32) faisant saillie depuis une périphérie de l'élément d'étanchéité annulaire (31) de telle sorte que le segment saillant (32) s'étend vers l'extérieur depuis une périphérie extérieure d'une deuxième des surfaces de fixation (34) quand le bloc (11) et le corps (12) de pompe sont combinés par le biais des surfaces de fixation respectives (14, 34) avec l'élément d'étanchéité (31) incorporé dans la rainure annulaire (29) ;
**caractérisé en ce que** la rainure annulaire (29) inclut un segment de rainure de bifurcation (33) qui bifurque de ladite rainure annulaire (29) et se situe dans ladite première des surfaces de fixation (14) de telle sorte que le segment saillant (32) est incorporé dans le segment de rainure de bifurcation (33) quand le bloc (11) et le corps (12) de pompe sont combinés par le biais des surfaces de fixation respectives (14, 34) avec l'élément d'étanchéité (31) incorporé dans la rainure annulaire (29),
dans lequel ladite première des surfaces de fixation (14) présente un plan unique qui s'étend en continu autour de la rainure annulaire (29) et du segment de rainure de bifurcation (33) d'une manière environnante.

2. Mécanisme d'étanchéité destiné à la pompe à eau (10) selon la revendication 1, dans lequel le moyen d'entraînement (35) comprend une poulie (21) supportée en rotation par une section de support cylindrique (20) par le biais d'une unité (23) porteuse d'arbre, la section de support cylindrique (20) étant disposée dans une partie du corps (12) de pompe, la partie se trouvant à proximité d'un premier côté de la pompe à eau (10), et
dans lequel la poulie (21) inclut un arbre (24) qui s'étend vers l'autre côté de la pompe à eau (10) à travers un trou central situé dans la section de support cylindrique (20) de telle sorte qu'une partie d'extrémité de l'arbre (24) est combinée d'un seul tenant avec la roue (15), la partie d'extrémité se trouvant à proximité de l'autre côté de la pompe à eau (10).

3. Mécanisme d'étanchéité destiné à la pompe à eau (10) selon la revendication 1 ou 2, dans lequel ladite première des surfaces de fixation (14) se trouve dans le bloc (11) et ladite deuxième des surfaces de fixation (34) se trouve dans le corps (12) de pompe.
